# EUROPÄISCHE PATENTSCHRIFT

(11) **EP 2 436 099 B1**
(45) Veröffentlichungstag und Bekanntmachung des Hinweises auf die Patenterteilung: **04.03.2015**
(21) Anmeldenummer: 10712736.7
(22) Anmeldetag: 31.03.2010
(51) Int. Cl.: H02K 1/27, H02K 1/30

(54) **ELEKTRISCHE MASCHINE**
ELECTRICAL MACHINE
MACHINE ELECTRIQUE

(30) Priorität: 28.05.2009 DE 102009026524
(43) Veröffentlichungstag der Anmeldung: 04.04.2012
(73) Patentinhaber: Robert Bosch GmbH, 70442 Stuttgart (DE)
(72) Erfinder: FEUERROHR, Lin, 77833 Ottersweier (DE); ROTH, Karl-Juergen, 71701 Schwieberdingen (DE); KOENIG, Tilo, 77815 Buehl (DE); HOLZWARTH, Bruno, 71701 Schwieberdingen (DE)
(86) Internationale Anmeldenummer: PCT/EP2010/054265
(87) Internationale Veröffentlichungsnummer: WO 2010/136239

(56) Entgegenhaltungen:
- EP-A1- 0 449 538
- EP-A2- 1 309 066
- JP-A- 11 113 198
- US-A1- 2007 228 858

## Beschreibung

### Stand der Technik

Die Erfindung betrifft eine elektrische Maschine, insbesondere einen Elektromotor mit einem Rotor und einer Welle. Speziell betrifft die Erfindung das Gebiet der Elektromotoren für Kraftfahrzeuge, insbesondere die als elektrische Hilfsantriebe dienenden Elektromotoren zur fremdkraftbetätigten Verstellung oder zur Unterstützung einer Verstellung von Elementen eines Kraftfahrzeugs.

Aus der US 2007/0252469 A1 ist ein Elektromotor mit Lamellen bekannt, wobei Magnete in Aussparungen vorgesehen sind, die sich in axialer Richtung durch den Rotorkern erstrecken. Diese Aussparungen sind außerdem radial ausgedehnt. Durch die Ausgestaltung des Rotors sind magnetische Flussverluste möglichst reduziert.

Der aus der US 2007/0252469 A1 bekannte Elektromotor hat den Nachteil, dass es je nach Ausgestaltung zu Flussverlusten über die Lamellen kommt oder die mechanische Belastbarkeit deutlich reduziert ist.

Die US 2007/0228858 A1 offenbart eine elektrische Machine gemäß dem Oberbegriff des Anspruchs 1.

### Offenbarung der Erfindung

Die erfindungsgemäße elektrische Maschine mit den Merkmalen des Anspruchs 1 hat den Vorteil, dass eine Ausgestaltung im Hinblick auf magnetische Flussverluste und eine mechanische Belastbarkeit verbessert ist. Speziell können magnetische Flussverluste in Bezug auf eine vorgegebene mechanische Belastbarkeit verringert beziehungsweise kann eine mechanische Belastbarkeit in Bezug auf vorgegebene magnetische Flussverluste verbessert werden.

Durch die in den Unteransprüchen aufgeführten Maßnahmen sind vorteilhafte Weiterbildungen der im Anspruch 1 angegebenen elektrischen Maschine möglich.

Die Lamellen des Rotors können einzeln oder als Lamellenpaket oder mittels mehrerer Lamellenpakete vormontiert auf eine Welle gefügt sein. Hierbei sind die Lamellen und/oder die Lamellenpakete zumindest mittelbar mit der Welle verbunden. Vorzugsweise weisen mehrere Lamellen des Rotors, insbesondere alle oder fast alle Lamellen des Rotors, in einer Umfangsrichtung mehrere Lamellensektoren auf, zwischen denen die Magnettaschen ausgebildet sind, wobei jede der Lamellen einen inneren Befestigungskranz aufweist, wobei jede der Lamellen Verbindungsglieder aufweist, die die Lamellensektoren mit dem Befestigungskranz verbinden, und wobei jedes der Verbindungsglieder einen Hauptsteg, zumindest einen Seitenarm, der von dem Hauptsteg in der Umfangsrichtung abzweigt, und zumindest einen Seitenarm, der von dem Hauptsteg entgegen der Umfangsrichtung abzweigt, aufweist.

Vorteilhaft ist es, dass in der Umfangsrichtung genau ein Seitenarm von dem Hauptsteg abzweigt und/oder dass entgegen der Umfangsrichtung genau ein Seitenarm von dem Hauptsteg abzweigt. Hierdurch ist eine robuste Ausgestaltung der Lamelle möglich. Ferner vereinfacht sich die Herstellung der Lamelle, die beispielsweise durch Stanzen aus einem Blech gebildet sein kann. Die Lamelle, die den Befestigungskranz, die Verbindungsglieder und die Lamellensektoren umfasst, wird dabei vorzugsweise einstückig aus einem Blech ausgestanzt.

Vorteilhaft ist es allerdings auch, dass in der Umfangsrichtung beabstandet zu dem Seitenarm ein weiterer Seitenarm von dem Hauptsteg abzweigt und dass entgegen der Umfangsrichtung beabstandet zu dem Seitenarm ein weiterer Seitenarm von dem Hauptsteg abzweigt. Hierdurch kann sowohl in der Umfangsrichtung als auch entgegen der Umfangsrichtung eine jeweils zwei- oder mehrarmige Verbindung des Hauptstegs des Verbindungsglieds mit dem jeweiligen Lamellensektor erfolgen. Die Ausgestaltung der Seitenarme kann hierbei im Hinblick auf auftretende Belastungen, insbesondere Spannungen im Material, optimiert sein. Speziell kann das Material der Lamelle, in Bereichen, die nur wenig zur Bauteilfestigkeit beitragen, weggelassen werden, um Flussverluste zu minimieren.

Hierbei ist es ferner vorteilhaft, dass der Seitenarm und der weitere Seitenarm, die in der Umfangsrichtung von dem Hauptsteg abzweigen, in der Umfangsrichtung zumindest teilweise zusammenlaufen und dass der Seitenarm und der weitere Seitenarm, die entgegen der Umfangsrichtung von dem Hauptsteg abzweigen, entgegen der Umfangsrichtung ausgehend von dem Hauptsteg zumindest teilweise zusammenlaufen. Hierdurch ist eine optimierte Geometrie gegeben, bei der das Material der Seitenarme besonders gut zur Bauteilfestigkeit beiträgt. Dadurch können die Seitenarme relativ dünn ausgestaltet sein, um magnetische Flussverluste zu minimieren.

Vorteilhaft ist es auch, dass der Hauptsteg des Verbindungsglieds zu dem Befestigungskranz führt. Bei dieser Ausgestaltung führen die Seitenarme der Verbindungsglieder zu den einzelnen Lamellensektoren.

Hierbei ist es vorteilhaft, dass die Seitenarme eines jeden Verbindungsglieds zu jeweils einem Lamellensektor führen und dass die Seitenarme eines Verbindungsglieds und der Lamellensektor, zu dem die Seitenarme des Verbindungsglieds führen, eine Aussparung der Lamelle umschließen. Speziell bei dieser Ausgestaltung ist es von Vorteil, dass das Verbindungsglied mit dem Hauptsteg und den Seitenarmen zumindest näherungsweise Y-förmig ausgestaltet ist. Flussverluste werden bei dieser Ausgestaltung dadurch reduziert, dass der Fluss, der von einem Lamellensektor mit magnetischem Nordpol zu einem Lamellensektor mit magnetischem Südpol verläuft, einen besonders langen Weg durch das Lamellenblech zurücklegen muss. Er muss hier nicht nur durch den oberen Teil des Y-förmig ausgestalteten Verbindungsglieds, sondern auch durch den unteren Teil des Y-förmig ausgestalteten Verbindungsglieds, nämlich den Hauptsteg, verlaufen und dann weiter durch den Befestigungskranz. Dadurch wird der Weg besonders lang und die magnetischen Flussverluste gering.

Vorteilhaft ist es auch, dass die Seitenarme eines jeden Verbindungsglieds zu jeweils benachbarten Lamellensektoren führen. Hierbei ist es ferner vorteilhaft, dass der Hauptsteg des Verbindungsglieds zumindest näherungsweise auf einer radialen Achse einer Magnettasche, die zwischen den benachbarten Lamellensektoren, zu denen die Seitenarme des Verbindungsglieds führen, angeordnet ist. Hierdurch kann eine hohe mechanische Stabilität bei der Verbindung benachbarter Lamellensektoren über die Verbindungsglieder gewährleistet werden. Außerdem kann bei dieser Ausgestaltung in vorteilhafter Weise an dem Hauptsteg ein Klemmfortsatz vorgesehen sein, der sich entlang der radialen Achse zu der Magnettasche erstreckt, wobei ein in der Magnettasche angeordneter Magnet von dem Klemmfortsatz in der Magnettasche gehalten ist. Der Magnet wird hierbei vorzugsweise durch mehrere solcher Klemmfortsätze von mehreren hintereinander angeordneten Lamellen in der Magnettasche gehalten.

In vorteilhafter Weise kann die Lamelle mit dem Befestigungskranz zumindest mittelbar an der Welle anliegen und/oder zumindest mittelbar an der Welle befestigt sein. Hierbei können Klemmnäschen und Zentriernäschen an dem Befestigungskranz ausgebildet sein, die auf die Welle gerichtet sind und zur Ausrichtung der Lamelle an der Welle sowie zur Befestigung der Lamelle an der Welle dienen.

Vorteilhaft ist es, dass die Lamellensektoren an einem Umfang der Lamelle an den Magnettaschen über außen angeordnete Stege miteinander verbunden sind oder dass die Lamellensektoren an dem Umfang der Lamelle an den Magnettaschen nicht miteinander verbunden sind und Halteabsätze vorgesehen sind, an denen sich in den Magnettaschen angeordnete Magnete abstützen. Hierdurch kann in Bezug auf den jeweiligen Anwendungsfall eine Optimierung in Bezug auf mechanische Stabilität und eine Minimierung von Flussverlusten erfolgen.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 einen Rotor einer elektrischen Maschine mit einer Lamelle und einer Welle in einer schematischen Darstellung entsprechend einem ersten Beispiel, das nicht zur Erfindung gehört.
Fig. 2 die in Fig. 1 dargestellte Lamelle in einer auszugsweisen Darstellung entsprechend einem zweiten Ausführungsbeispiel;
Fig. 3 die in Fig. 1 dargestellte Lamelle in einer auszugsweisen Darstellung entsprechend einem dritten Ausführungsbeispiel;
Fig. 4 die in Fig. 1 dargestellte Lamelle in einer auszugsweisen Darstellung entsprechend einem vierten Ausführungsbeispiel und
Fig. 5 die in Fig. 1 dargestellte Lamelle in einer auszugsweisen Darstellung entsprechend einem fünften Ausführungsbeispiel.

### Ausführungsformen der Erfindung

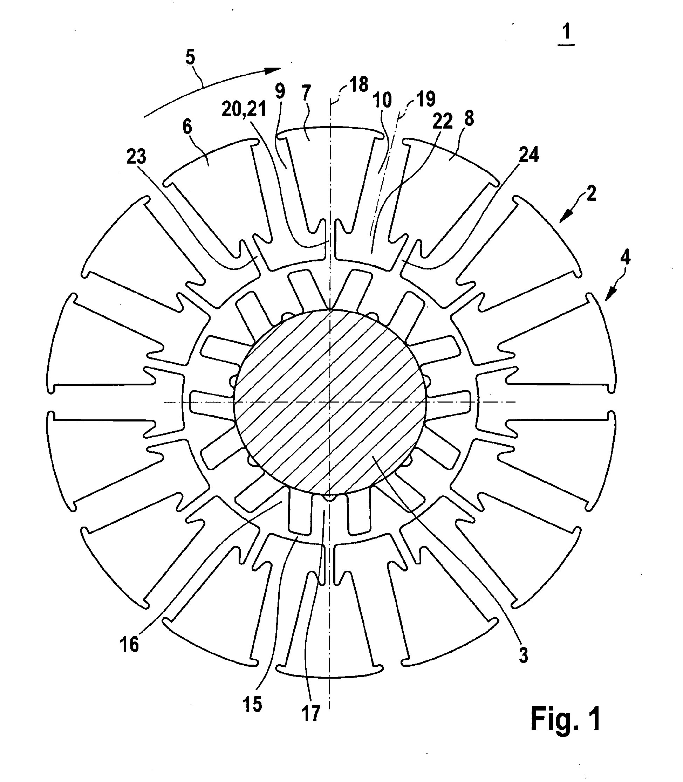

Fig. 1 zeigt eine elektrische Maschine 1 mit einem Rotor 2 und einer Welle 3 in einer schematischen Darstellung entsprechend einem Beispiel, dass nicht zur Erfindung gehört. Die elektrische Maschine 1 kann insbesondere als Elektromotor ausgestaltet sein und für ein Kraftfahrzeug dienen. Speziell eignet sich die elektrische Maschine 1 zur fremdkraftbetätigten Verstellung von Elementen eines Kraftfahrzeugs, beispielsweise eines Schiebedachs, eines Fensters oder eines Sitzelements. Ferner kann die elektrische Maschine 1 als Elektromotor zur Lenkkraftunterstützung dienen. Die erfindungsgemäße elektrische Maschine 1 eignet sich jedoch auch für andere Anwendungsfälle.

Die elektrische Maschine 1 ist vorzugsweise als permanent erregter elektrischer Antrieb ausgestaltet, wobei der Rotor 2 in Speichenanordnung oder Sammleranordnung ausgebildet sein kann. In diesem Ausführungsbeispiel weist der Rotor 2 eine Lamelle 4 und eine Vielzahl weiterer Lamellen, die der Lamelle 4 entsprechen, auf. Die Lamelle 4 ist in diesem Ausführungsbeispiel direkt auf der Welle 3 befestigt. Die Lamelle 4 ist in einer Umfangsrichtung 5 in mehrere Lamellensektoren 6, 7, 8 aufgeteilt, zwischen denen Magnettaschen 9, 10 ausgebildet sind. Dabei sind zur Vereinfachung der Darstellung nur die Lamellensektoren 6, 7, 8 und die Magnettaschen 9, 10 gekennzeichnet.

Außerdem weist die Lamelle 4 einen Befestigungskranz 15 auf, an dem mehrere Klemmnäschen 16 und Zentriernäschen 17 ausgestaltet sind. Über die Klemmnäschen 16 und die Zentriernäschen 17 ist eine Positionierung der Lamelle 4 an der Welle 3 und eine Befestigung der Lamelle 4 am Befestigungskranz 15 mit der Welle 3 ermöglicht.

In der Fig. 1 ist eine radiale Achse 18 des Lamellensektors 7 dargestellt. Außerdem ist eine radiale Achse 19 der Magnettasche 10 dargestellt. Der Lamellensektor 7 ist symmetrisch bezüglich der radialen Achse 18 ausgestaltet. Die Magnettasche 10 ist symmetrisch bezüglich der radialen Achse 19 ausgestaltet.

Der Lamellensektor 7 ist über ein Verbindungsglied 20 mit dem Befestigungskranz 15 verbunden. In diesem Ausführungsbeispiel ist das Verbindungsglied aus einem Hauptsteg 21 gebildet. Der Hauptsteg 21 erstreckt sich dabei entlang der radialen Achse 18 des Lamellensektors 7. Der Hauptsteg 21 ist als länglicher und relativ schmaler Hauptsteg 21 ausgestaltet. Dadurch besteht ein gewisser Abstand zwischen dem Lamellensektor 7 und dem Befestigungskranz 15. Ein Hohlraum 22 zwischen einem in der Magnettasche 10 angeordneten Magneten und dem Befestigungskranz 15 ist dadurch relativ groß. Ferner ist ein relativ großer Abstand zwischen solch einem Magneten und der Welle 3 vorgegeben.

Ferner sind die Lamellensektoren 6, 8 über Verbindungsglieder 23, 24 mit dem Befestigungskranz 15 verbunden. Die Verbindungsglieder 23, 24 sind in diesem Ausführungsbeispiel entsprechend dem Verbindungsglied 20 ausgestaltet. Allerdings ist es auch möglich, dass die Verbindungsglieder 20, 23, 24 auf zwei oder mehr unterschiedliche Arten ausgestaltet sind.

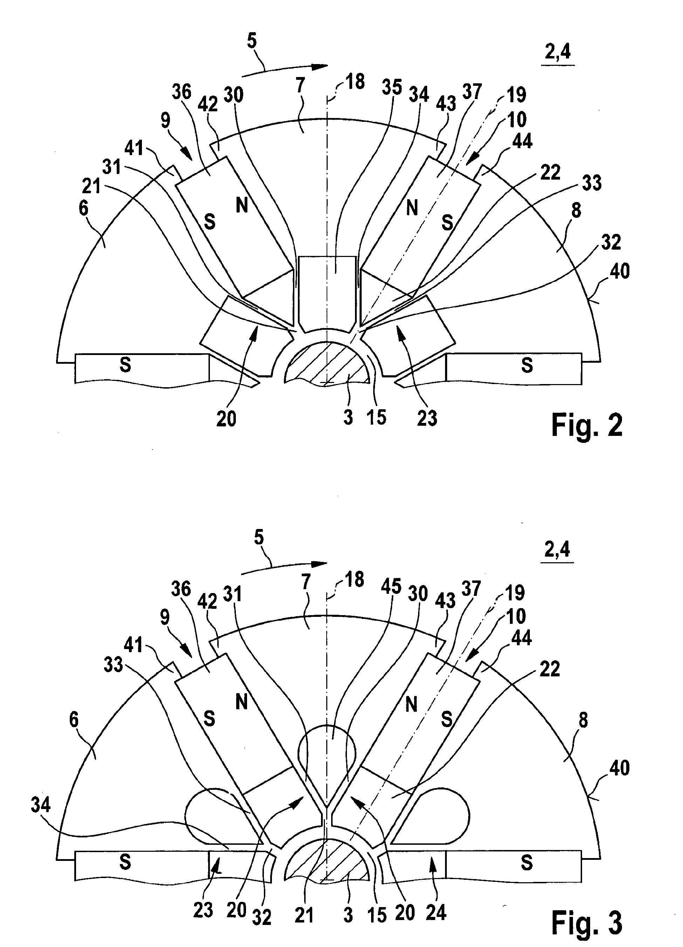

Fig. 2 zeigt die in Fig. 1 dargestellte Lamelle 4 in einer auszugsweisen Darstellung entsprechend einem zweiten Ausführungsbeispiel. In diesem Ausführungsbeispiel sind Verbindungsglieder 20, 23 dargestellt, die die Lamellensektoren 6, 7, 8 zusammen mit weiteren Verbindungsgliedern mit dem Befestigungskranz 15 verbinden. Hierbei ist der Lamellensektor 7 sowohl über das Verbindungsglied 20 als auch über das Verbindungsglied 23 mit dem Befestigungskranz 15 verbunden.

Das Verbindungsglied 20 weist den Hauptsteg 21 sowie einen Seitenarm 30 und einen Seitenarm 31 auf. Hierbei zweigt der Seitenarm 30 in der Umfangsrichtung 5 von dem Hauptsteg 21 ab, während der Seitenarm 31 entgegen der Umfangsrichtung 5 von dem Hauptsteg 21 abzweigt. In diesem Ausführungsbeispiel ist der Seitenarm 30 des Verbindungsglieds 20 mit dem Lamellensektor 7 verbunden. Der Seitenarm 31 des Verbindungsglieds 20 ist mit dem Lamellensektor 6 verbunden. Das Verbindungsglied 23 ist entsprechend dem Verbindungsglied 20 ausgestaltet und weist einen Hauptsteg 32 sowie Seitenarme 33, 34 auf. Dabei zweigt der Seitenarm 33 in der Umfangsrichtung 5 von dem Hauptsteg 32 ab, während der Seitenarm 34 entgegen der Umfangsrichtung 5 von dem Hauptsteg 32 abzweigt.

Somit ist in diesem Ausführungsbeispiel der Lamellensektor 7 einerseits über den Seitenarm 30 und den Hauptsteg 32 des Verbindungsglieds 20 mit dem Befestigungskranz 15 und andererseits über den Seitenarm 34 und den Hauptsteg 32 des Verbindungsglieds 23 mit dem Befestigungskranz 15 verbunden. Die direkte Verbindung des Lamellensektors 7 mit dem Befestigungskranz 15 erfolgt somit über zwei Verbindungsglieder 20, 23.

Der Lamellensektor 7, die Seitenarme 30, 34, die Hauptstege 21, 32 und der Befestigungskranz 15 umschließen eine Aussparung 35 der Lamelle 4.

In den Magnettaschen 9, 10 sind Permanentmagnete 36, 37 angeordnet, wobei die magnetische Polarität der Permanentmagnete 36, 37 durch die Buchstaben "N" für Nordpol und "S" für Südpol veranschaulicht ist. Magnetische Flussverluste treten durch einen Fluss durch das Material der Lamelle 4 von Nord nach Süd auf. Beispielsweise erfolgt solch ein Fluss von dem Lamellensektor 7, an den die Nordpole der Magnete 36, 37 angrenzen, zu den Lamellensektoren 6, 8, an denen unter anderem die Südpole der Magnete 36, 37 angrenzen.

Beispielsweise tritt ein magnetischer Fluss von dem Lamellensektor 7 über den Seitenarm 30 und den Seitenarm 31 des Verbindungsglieds 20 auf. Allerdings sind die Seitenarme 30, 31 relativ dünn ausgestaltet, so dass ein diesbezüglicher Flussverlust verringert ist. Ein Fluss über die Welle 3 ist durch die relativ große Aussparung 35 sowie die relativ kleinen Hauptstege 21, 32 der Verbindungsglieder 20, 23 reduziert. Somit sind Flussverluste verringert, wodurch die Funktionsweise der elektrischen Maschine 1 verbessert ist.

Bei dem in der Fig. 2 dargestellten Ausführungsbeispiel sind die Verbindungsglieder 20, 23 Y-förmig ausgestaltet. Dadurch wird eine besonders große Festigkeit erzielt. Ferner kann dabei ein großer Abstand zu der Welle 3 erzielt werden.

In Bezug auf einen bestimmten Abstand entlang der radialen Achse 19, der durch das Verbindungsglied 23 gewährleistet ist, sind die Seitenarme 33, 34 vorzugsweise relativ lang, während der Hauptsteg 32 relativ kurz ausgestaltet ist. Dies gilt entsprechend für das Verbindungsglied 20. Dadurch können Flussverluste weiter reduziert werden, da der Weg des magnetischen Flusses von dem Lamellensektor 7 zu den Lamellensektoren 6, 8 über die Verbindungsglieder 20, 23 dadurch verlängert werden kann.

In diesem Ausführungsbeispiel sind die Lamellensektoren 6, 7, 8 an einem Umfang 40 der Lamelle 4 an den Magnettaschen 9, 10 nicht miteinander verbunden. Allerdings sind an der Magnettasche 9 Halteabsätze 41, 42 vorgesehen, an denen sich der in der Magnettasche 9 angeordnete Magnet 36 nach außen abstützt. Entsprechend sind an der Magnettasche 10 Halteabsätze 43, 44 vorgesehen, die zum Halten des Magneten 37 dienen. Der Halteabsatz 41 ist an dem Lamellensektor 6 ausgebildet. Die Halteabsätze 42, 43 sind an dem Lamellensektor 7 ausgebildet. Der Halteabsatz 44 ist an dem Lamellensektor 8 ausgebildet.

Fig. 3 zeigt die in Fig. 1 dargestellte Lamelle 4 eines Rotors 2 in einer auszugsweisen Darstellung entsprechend einem dritten Ausführungsbeispiel. In diesem Ausführungsbeispiel ist jeder der Lamellensektoren 6, 7, 8 individuell über ein Verbindungsglied 20, 23, 24 mit dem Befestigungskranz 15 verbunden. Beispielsweise ist der Lamellensektor 7 nur über das Verbindungsglied 20 direkt mit dem Befestigungskranz 15 verbunden. Der Hauptsteg 21 des Verbindungsglieds 20 ist zumindest näherungsweise auf der radialen Achse 18 des Lamellensektors 7 angeordnet. Die Seitenarme 30, 31 des Verbindungsglieds 20 führen zu dem Lamellensektor 7, wobei die Seitenarme 30, 31 und der Lamellensektor 7, zu dem die Seitenarme 30, 31 führen, eine Aussparung 45 der Lamelle 4 umschließen. Die Aussparung 45 ist symmetrisch zu der radialen Achse 18 ausgestaltet. Ferner ist die Aussparung 45 auf Grund der V-förmigen Anordnung der beiden Seitenarme 30, 31 tropfenförmig ausgestaltet. Die Aussparung 45 kann allerdings auch auf andere Weise, insbesondere als dreiecksförmige Aussparung 45, ausgestaltet sein.

Durch die Y-förmige Ausgestaltung des Verbindungsglieds 20 mit dem Hauptsteg 21 und den Seitenarmen 30, 31 ergibt sich eine große mechanische Festigkeit. Diese mechanische Festigkeit kann insbesondere durch einen relativ kurzen Hauptsteg 21 und entsprechend lange Seitenarme 30, 31 optimiert werden. Die Flussverluste sind bei dieser Ausgestaltung erheblich reduziert. Denn Flussverluste durch einen Magnetfluss von dem Lamellensektor 7 zu beispielsweise dem Lamellensektor 6 können durch das Material der Lamelle 4 nur über einen besonders langen Weg erfolgen. Dieser Weg läuft nicht nur durch die beiden Seitenarme 30, 31 des Verbindungsglieds 20, sondern auch durch den Hauptsteg 21. Außerdem muss ein gewisser Weg über den Befestigungskranz 15 und dann über das gesamte Verbindungsglied 23 zurückgelegt werden. Somit ist der Weg bei dieser Ausgestaltung besonders lang und die Flussverluste sind entsprechend gering.

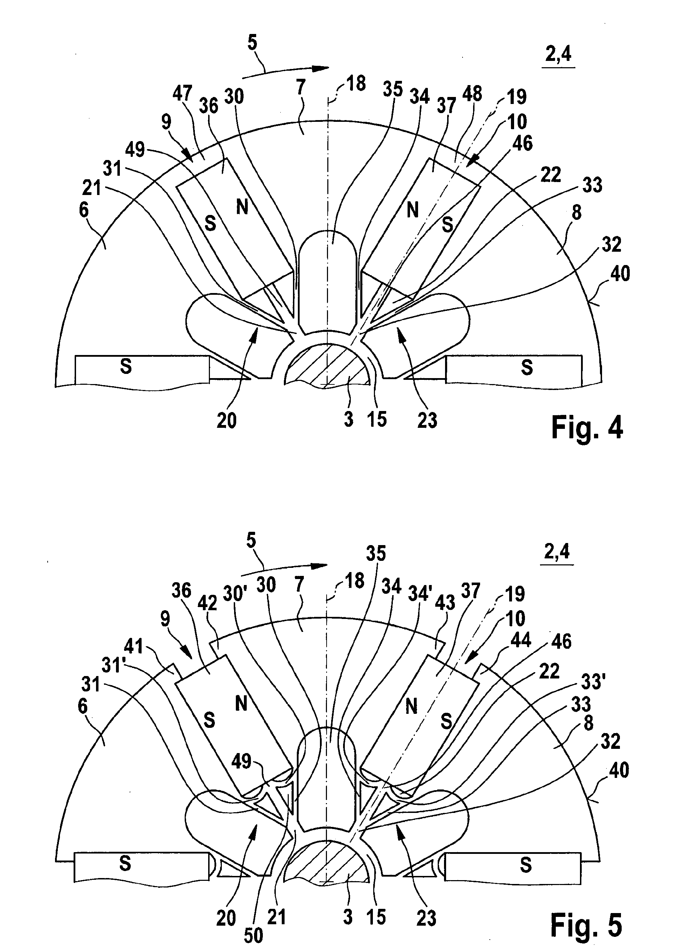

Fig. 4 zeigt die in Fig. 1 dargestellte Lamelle 4 des Rotors 2 in einer auszugsweisen Darstellung entsprechend einem vierten Ausführungsbeispiel. In diesem Ausführungsbeispiel ist beispielsweise der Lamellensektor 7 über die Verbindungsglieder 20, 23 mit dem Befestigungskranz 15 und den anderen Lamellensektoren 6, 8 verbunden.

Die Hauptstege 21, 32 der Verbindungsglieder 20, 23 sind mit dem Befestigungskranz 15 verbunden. Die Seitenarme 30, 31, 33, 34 der Verbindungsglieder 20, 23 sind mit den Lamellensektoren 6, 7, 8 verbunden. Somit führen die Hauptstege 21, 32 zu dem Befestigungskranz, während die Seitenarme 30, 31, 33, 34 zu den Lamellensektoren 6, 7, 8 führen. Dabei führen die Seitenarme 30, 31 des Verbindungsglieds 20 zu einander benachbarten Lamellensektoren 6, 7. Entsprechend führen die Seitenarme 33, 34 des Verbindungsglieds 23 zu einander benachbarten Lamellensektoren 7, 8.

In diesem Ausführungsbeispiel ist beispielsweise der Hauptsteg 32 des Verbindungsglieds 23 auf der radialen Achse 19 der Magnettasche 10 und somit des Magneten 37 angeordnet. Ferner weist der Hauptsteg 32 einen Klemmfortsatz 46 auf, der sich entlang der radialen Achse 19 der Magnettasche 10 erstreckt. Der Klemmfortsatz 46 reicht dabei bis zu dem Magneten 37, der in der Magnettasche 10 angeordnet ist.

Die Lamelle 4 ist in diesem Ausführungsbeispiel an ihrem Umfang 40 geschlossen ausgestaltet. Hierbei weist die Lamelle 4 an den Magnettaschen 9, 10 am Umfang 40 außen angeordnete Stege 47, 48 auf. An den Stegen 47, 48 stützen sich die Magnete 36, 37 nach außen radial ab. Dadurch ist der Magnet 37 zwischen dem Klemmfortsatz 46 und dem Steg 48 eingeklemmt. Hierbei können weitere Klemmfortsätze von weiteren Lamellen zusammen mit dem Klemmfortsatz 46 den Magneten 37 in der Magnettasche 10 halten. Entsprechend weist der Hauptsteg 21 des Verbindungsglieds 20 einen Klemmfortsatz 49 auf. Die Ausgestaltung des Verbindungsglieds 20 in Bezug auf den Klemmfortsatz 49 und die Funktion zum Halten des Magneten 36 in der Magnettasche 9 ist in entsprechender Weise verwirklicht.

In diesem Ausführungsbeispiel sind die Verbindungsglieder 20, 23 nur teilweise Y-förmig ausgestaltet. Hierbei sind der Hauptsteg 21 zusammen mit den Seitenarmen 30, 31 des Verbindungsglieds 20 Y-förmig ausgestaltet, wobei zusätzlich der Klemmfortsatz 49 vorgesehen ist.

Fig. 5 zeigt eine Lamelle 4 eines Rotors 2, der in Fig. 1 dargestellten elektrischen Maschine 1 entsprechend einem fünften Ausführungsbeispiel. In diesem Ausführungsbeispiel sind die Lamellensektoren 6, 7 über das Verbindungsglied 20 mit dem Befestigungskranz 15 verbunden. Ferner sind die Lamellensektoren 7, 8 über das Verbindungsglied 23 mit dem Befestigungskranz 15 verbunden. Hierbei weist das Verbindungsglied 20 die Seitenarme 30, 31 auf. Dabei zweigt der Seitenarm 30 in der Umfangsrichtung 5 von dem Hauptsteg 21 ab, während der Seitenarm 31 entgegen der Umfangsrichtung 5 von dem Hauptsteg 21 abzweigt. Ferner sind weitere Seitenarme 30', 31' vorgesehen. Dabei zweigt der Seitenarm 30' in der Umfangsrichtung 5 von dem Hauptsteg 21 ab. Der Seitenarm 31' zweigt entgegen der Umfangsrichtung 5 von dem Hauptsteg 21 ab. Hierbei zweigen die Seitenarme 30, 30', die in der Umfangsrichtung 5 von dem Hauptsteg 21 abzweigen, beabstandet voneinander von dem Hauptsteg 21 ab. Ferner laufen die beiden Seitenarme 30, 30' in der Umfangsrichtung 5 zumindest teilweise und in diesem Ausführungsbeispiel vollständig zusammen. Die Seitenarme 30, 30' und der Hauptsteg 21 schließen dadurch eine Aussparung 50 ein, die in Form eines verzerrten Dreiecks ausgestaltet ist.

Entsprechend zweigen die Seitenarme 31, 31' des Verbindungsglieds 20 beabstandet zueinander von dem Hauptsteg 21 entgegen der Umfangsrichtung 5 ab. Die Seitenarme 31, 31' laufen hierbei entgegen der Umfangsrichtung 5 zusammen.

Das Verbindungsglied 23 weist ebenfalls weitere Seitenarme 33', 34' auf. Das Verbindungsglied 23 ist entsprechend dem Verbindungsglied 20 ausgestaltet. Außerdem weisen die Verbindungsglieder 20, 23 an ihren Hauptstegen 21, 32 kurze Klemmfortsätze 46, 49 auf, um die Permanentmagnete 36, 37 in den Magnettaschen 9, 10 zu halten.

Die Verbindungsglieder 20, 23 sind in diesem Ausführungsbeispiel näherungsweise Y-förmig ausgestaltet, so dass in und entgegen der Umfangsrichtung 5 auftretende mechanische Belastungen, insbesondere mechanische Spannungen, vorteilhaft von den Lamellensektoren 6, 7, 8 auf den Befestigungskranz 15 übertragen werden können. Außerdem können die mechanischen Spannungen zwischen den Lamellensektoren 6, 7, 8 übertragen werden. Dadurch ergibt sich eine hohe mechanische Belastbarkeit der Lamelle 4 im Betrieb der elektrischen Maschine 1, wobei ein auftretender Streufluss verringert ist.

Bei den beschriebenen Ausführungsbeispielen wird somit erzielt, dass ein magnetischer Fluss hauptsächlich über einen Luftspalt an dem Umfang 40 der Lamelle 4 und den Stator der elektrischen Maschine 1 geführt ist. Ein hierbei auftretender Streufluss ist weitgehend verhindert.

Bei der Ausgestaltung des Rotors 2 der elektrischen Maschine 1 können unterschiedliche Lamellenformen der einzelnen hintereinander geschichteten Lamellen der Welle 3 zum Einsatz kommen. Speziell kann ein Teil der Lamellen des Rotors 2 am Umfang 40 offen ausgestaltet sein, wie es bei den anhand der Fig. 1, 2, 3 und 5 beschriebenen Ausführungsbeispielen der Fall ist. Ein anderer Teil der Lamellen kann am Umfang 40 geschlossen sein, wie es bei dem anhand der Fig. 4 beschriebenen Ausführungsbeispiel der Fall ist. Eine einzelne Lamelle 4 ist hierbei an ihrem Umfang 40 vorzugsweise entweder vollständig geschlossen oder an jeder Magnettasche, insbesondere den Magnettaschen 9, 10, geöffnet. Dabei sind an allen Magnettaschen 9, 10 Halteabsätze 41 bis 44 oder Stege 47, 48 vorgesehen.

Eine einzelne Lamelle 4 des Rotors 2 ist vorzugsweise einstückig ausgestaltet. Hierbei wird solch eine Lamelle 4 vorzugsweise aus einem Blech ausgestanzt, wobei sich alle Strukturen durch Stanzen ausbilden lassen, insbesondere können durch Stanzen die Verbindungsglieder 20, 23, 24 ausgestaltet werden, die in unterschiedlicher Form anhand den Fig. 1 bis 5 beschrieben sind. Hierbei sind je nach Anwendungsfall auch Abwandlungen möglich. Insbesondere kann eine Ausgestaltung mit mehr als zwei Seitenarmen 30, 31, beispielsweise eine Ausgestaltung mit Seitenarmen 30, 30', 31, 31', wie sie in der Fig. 5 veranschaulicht ist, auch bei der in der Fig. 3 veranschaulichten Anordnung des Verbindungsglieds 20 zum Einsatz kommen, bei der jeweils einer der Lamellensektoren 6, 7, 8 über genau ein Verbindungsglied 20, 23, 24 mit dem Befestigungskranz 15 verbunden ist.

Die Polanbindung ist auch für eine Folgepolanordnung geeignet. Hierbei wird nur jeder zweite Rotorpol durch einen Permanentmagneten 36, 37 realisiert. Die Rotorpole ohne Magneten bilden sich hierbei zwangsweise durch den magnetischen Rückschluss aus. Ferner kann die Polanbindung auch mit anderen Maßnahmen kombiniert werden. Zum Beispiel kann eine Kombination mit beliebigen Kombinationen von Stegen über und unter den Magneten 36, 37, die hier in axialer Richtung in den Rotor 2 eingeschoben sind, erfolgen und es ist auch möglich, dass Stege weggelassen werden. Speziell kann entsprechend den außenliegenden Stegen 47, 48 an den Magnettaschen 9, 10, die in der Fig. 4 veranschaulicht sind, auch eine Ausgestaltung mit innenliegenden Stegen verwirklicht werden, um die Magnete 36, 37 in den Magnettaschen 9, 10 zu halten. Ferner können auch andere Maßnahmen zum Klemmen der Magnete 36, 37 in den Magnettaschen 9, 10 realisiert werden. Ferner kann der Befestigungskranz 15 auch in anderer Weise ausgestaltet sein, um eine Schnittstelle der Lamelle 4 zu der Welle 3 zu bilden.

Außerdem ist es möglich, dass verbleibende Öffnungen oder Spalte mit Kunststoff oder einem Klemmstoff aufgefüllt sind. Speziell kann die Fixierung der Magnete 36, 37 durch Kleben, Umspritzen mit Kunststoff oder dergleichen erfolgen. Zum Befestigen der Magnete 36, 37 können allerdings auch Zusatzbauteile dienen, insbesondere Federelemente. Zur Befestigung der Magnete 36, 37 können auch Halteabsätze dienen, die als innenliegende Halteabsätze an der Lamelle 4 ausgestaltet sind.

Außerdem kann die Lamelle 4 unterschiedlich ausgestaltete Konturen am Umfang 40 aufweisen. Speziell kann eine geeignete Kontur zur Rastmomentreduzierung vorgesehen sein, beispielsweise eine Sinuspol-Kontur.

Zur weiteren Reduzierung der Flussverluste, dass heißt eines Streuflusses, können beim Aufbau des Rotors 2 auch Lamellen 4 zum Einsatz kommen, bei denen in axialer Richtung auf die Polanbindung in einem oder mehreren Blechen verzichtet wird. Die dann losen Lamellenbleche können zum Beispiel durch Paketierpunkte oder über geschlossene Außenstege im Lamellenpaket des Rotors 2 befestigt werden. Entsprechend kann die Magnetbefestigung nur in einigen Blechen vorhanden sein. Außerdem muss in einer Lamelle 4 nicht notwendigerweise jedes Verbindungsglied 20, 23, 24 vorhanden sein. Speziell kann nur jedes zweite oder dritte Verbindungsglied vorgesehen sein. Die Befestigung der Lamellensektoren 6, 7, 8 an dem Befestigungskranz 15 kann in diesem Fall mittelbar über andere Lamellen erfolgen.

Die Erfindung ist nicht auf die beschriebenen Ausführungsbeispiele beschränkt, sondern lediglich durch die angefügten Ansprüche.

## Patentansprüche

1. Elektrische Maschine (1), insbesondere Elektromotor, mit einem Rotor (2), der mehrere Lamellen (4) aufweist, wobei eine Lamelle (4) des Rotors (2) in einer Umfangsrichtung (5) in mehrere Lamellensektoren (6, 7, 8) aufgeteilt ist, zwischen denen Magnettaschen (9, 10) ausgebildet sind, wobei die Lamelle (4) einen inneren Befestigungskranz (15) aufweist, wobei die Lamelle (4) Verbindungsglieder (20, 23, 24) aufweist, die die Lamellensektoren (6, 7, 8) mit dem Befestigungskranz (15) verbinden, und wobei ein Verbindungsglied (20) einen Hauptsteg (21), zumindest einen **ersten** Seitenarm (30), der von dem Hauptsteg (21) in der Umfangsrichtung (5) abzweigt, und zumindest einen **zweiten** Seitenarm (31), der von dem Hauptsteg (21) entgegen der Umfangsrichtung (5) abzweigt, aufweist, **wobei der Hauptsteg (21)** des **Verbindungsglieds (20) zu dem Befestigungskranz (15) führt,** wobei das Verbindungsglied (20) mit dem Hauptsteg (21) und den Seitenarmen (30, 31) Y-förmig ausgestaltet ist, **dadurch gekennzeichnet, dass sich** der Hauptsteg (21) des Verbindungsglieds (20) auf einer radialen Achse einer Magnettasche (10) **befindet, wobei die Magnettasche (10)** zwischen den benachbarten Lamellensektoren (6, 7) **angeordnet ist,** zu denen die Seitenarme (30, 31) des Verbindungsglieds (20) führen.

2. Elektrische Maschine nach Anspruch 1,
**dadurch gekennzeichnet,**
**dass** in der Umfangsrichtung (5) genau ein Seitenarm (30) von dem Hauptsteg (21) abzweigt und/oder dass entgegen der Umfangsrichtung (5) genau ein Seitenarm (31) von dem Hauptsteg (21) abzweigt.

3. Elektrische Maschine nach Anspruch 1,
**dadurch gekennzeichnet,**
**dass** in der Umfangsrichtung (5) beabstandet **zum ersten** Seitenarm (30) ein weiterer dritter Seitenarm (30') von dem Hauptsteg (21) abzweigt und/oder dass entgegen der Umfangsrichtung (5) beabstandet **zum zweiten** Seitenarm (31) ein weiterer vierter Seitenarm (31') von dem Hauptsteg (21) abzweigt.

4. Elektrische Maschine nach Anspruch 3,
**dadurch gekennzeichnet,**
**dass** der **erste** Seitenarm (30) und der **dritte** Seitenarm (30') in der Umfangsrichtung (5) zumindest teilweise zusammenlaufen, beziehungsweise dass der **zweite** Seitenarm (31) und der **vierte** Seitenarm (31') entgegen der Umfangsrichtung (5) zumindest teilweise zusammenlaufen.

5. Elektrische Maschine nach **Anspruch** 1 bis 4,
**dadurch gekennzeichnet,**
**dass** die Seitenarme (30, 31) eines jeden Verbindungsglieds (20, 23) zu jeweils einem Lamellensektor (7) führen und dass die Seitenarme (30, 31) eines Verbindungsglieds (20, 23) und der Lamellensektor (7), zu dem die Seitenarme (30, 31) des Verbindungsglieds (20, 23) führen, eine Aussparung (45) der Lamelle (4) umschließen.

6. Elektrische Maschine nach **Anspruch 1 bis 4,**
**dadurch gekennzeichnet,**
**dass** die Seitenarme (30, 31) eines jeden Verbindungsglieds (20, 23) zu jeweils benachbarten Lamellensektoren (6, 7) führen.

7. Elektrische Maschine nach Anspruch 1,
**dadurch gekennzeichnet,**
**dass** der Hauptsteg (32) einen Klemmfortsatz (46) aufweist, der sich entlang der radialen Achse (19) zu der Magnettasche (10) erstreckt, und dass ein in der Magnettasche (10) angeordneter Magnet (37) von dem Klemmfortsatz (46) in der Magnettasche (10) gehalten ist.

8. Elektrische Maschine nach einem der Ansprüche 1 bis 7,
**dadurch gekennzeichnet,**
**dass** in einer Lamelle (4) nicht jedes Verbindungsglied (20, 23) vorhanden ist, sondern nur jedes zweite oder dritte Verbindungsglied (20, 23) ausgebildet ist.

9. Elektrische Maschine nach einem der Ansprüche 1 bis 8.
**dadurch gekennzeichnet,**
**dass** eine Welle (3) vorgesehen ist und dass die Lamelle (4) mit dem Befestigungskranz (15) zumindest mittelbar an der Welle (3) anliegt und/oder zumindest mittelbar an der Welle (3) befestigt ist.

10. Elektrische Maschine nach einem der Ansprüche 1 bis 9.
**dadurch gekennzeichnet,**
**dass** die Lamellensektoren (6, 7, 8) an einem Umfang (40) der Lamelle (4) an den Magnettaschen (9, 10) über außen angeordnete Stege (47, 48) miteinander verbunden sind oder dass die Lamellensektoren (6, 7, 8) an dem Umfang (40) der Lamelle (4) an den Magnettaschen (9, 10) nicht miteinander verbunden sind und Halteabsätze (41 bis 44) vorgesehen sind, an denen sich in den Magnettaschen (9, 10) angeordnete Magnete (36, 37) abstützen.

## Claims

1. Electrical machine (1), in particular an electric motor, having a rotor (2) which has a plurality of laminates (4), with one laminate (4) of the rotor (2) being divided into a plurality of laminate sectors (6, 7, 8) in a circumferential direction (5), between which laminate sectors (6, 7, 8) magnet pockets (9, 10) are formed, with the laminate (4) having an inner attachment crown (15), with the laminate (4) having connection elements (20, 23, 24) which connect the laminate sectors (6, 7, 8) to the attachment crown (15), and with one connection element (20) having a main web (21), at least one first side arm (30) which branches off from the main web (21) in the circumferential direction (5), and at least one second side arm (31) which branches off from the main web (21) in the opposite direction to the circumferential direction (5), with the main web (21) of the connection element (20) leading to the attachment crown (15), with the connection element (20) together with the main web (21) and the side arms (30, 31) being Y-shaped,
**characterized**
**in that** the main web (21) of the connection element (20) is located on a radial axis of a magnet pocket (10), with the magnet pocket (10) being arranged between the adjacent laminate sectors (6, 7) to which the side arms (30, 31) of the connection element (20) lead.

2. Electrical machine according to Claim 1,
**characterized**
**in that** one and only one side arm (30) branches off from the main web (21) in the circumferential direction (5), and/or in that one and only one side arm (31) branches off from the main web (21) in the opposite direction to the circumferential direction (5).

3. Electrical machine according to Claim 1,
**characterized**
**in that** a further third side arm (30') branches off from the main web (21) at a distance from the first side arm (30) in the circumferential direction (5), and/or in that a further fourth side arm (31') branches off from the main web (21) at a distance from the second side arm (31) in the opposite direction to the circumferential direction (5).

4. Electrical machine according to Claim, 3
**characterized**
**in that** the first side arm (30) and the third side arm (30') run together at least in places in the circumferential direction (5), and/or in that the second side arm (31) and the fourth side arm (31') run together at least in places in the opposite direction to the circumferential direction (5).

5. Electrical machine according to claims 1 to 4,
**characterized**
**in that** the side arms (30, 31) of each connection element (20, 23) each lead to one laminate sector (7), and in that the side arms (30, 31) of a connection element (20, 23) and the laminate sector (7) to which the side arms (30, 31) of the connection element (20, 23) lead surround a cutout (45) in the laminate (4).

6. Electrical machine according to Claims 1 to 4,
**characterized**
**in that** the side arms (30, 31) of each connection element (20, 23) each lead to adjacent laminate sectors (6, 7).

7. Electrical machine according to Claim 1,
**characterized**
**in that** the main web (32) has a clamping projection (46), which extends along the radial axis (19) to the magnet pocket (10), and in that a magnet (37) which is arranged in the magnet pocket (10) is held in the magnet pocket (10) by the clamping projection (46).

8. Electrical machine according to one of Claims 1 to 7,
**characterized**
**in that** not every connection element (20, 23) is present in a laminate (4), rather only every second or third connection element (20, 23) is formed therein.

9. Electrical machine according to one of Claims 1 to 8,
**characterized**
**in that** a shaft (3) is provided, and in that the attachment crown (15) of the laminate (4) rests at least indirectly on the shaft (3), and/or is at least indirectly attached to the shaft (3).

10. Electrical machine according to one of Claims 1 to 9,
**characterized**
**in that** the laminate sectors (6, 7, 8) are connected to one another on a circumference (40) of the laminate (4) on the magnet pockets (9, 10) via webs (47, 48) which are arranged on the outside, or in that the laminate sectors (6, 7, 8) are not connected to one another on the circumference (40) of the laminate (4) at the magnet pockets (9, 10), and holding stops (41 to 44) are provided, on which magnets (36, 37) which are arranged in the magnet pockets (9, 10) are supported.

## Revendications

1. Machine électrique (1), en particulier moteur électrique, comprenant un rotor (2) qui comprend plusieurs lamelles (4), une lamelle (4) du rotor (2) étant divisée en plusieurs secteurs de lamelle (6, 7, 8) dans un sens circonférentiel (5), entre lesquels secteurs de lamelle sont réalisées des cavités pour aimants (9, 10), la lamelle (4) comprenant une couronne de fixation intérieure (15), la lamelle (4) comprenant des organes de liaison (20, 23, 24) qui relient les secteurs de lamelle (6, 7, 8) à la couronne de fixation (15), et un organe de liaison (20) comprenant une nervure principale (21), au moins un premier bras latéral (30) qui bifurque à partir de la nervure principale (21) dans le sens circonférentiel (5), et au moins un deuxième bras latéral (31) qui bifurque à partir de la nervure principale (21) dans le sens opposé au sens circonférentiel (5), la nervure principale (21) de l'organe de liaison (20) menant à la couronne de fixation (15), l'organe de liaison (20) étant configuré en forme de Y avec la nervure principale (21) et les bras latéraux (30, 31), **caractérisée en ce que** la nervure principale (21) de l'organe de liaison (20) se trouve sur un axe radial d'une cavité pour aimant (10), la cavité pour aimant (10) étant disposée entre les secteurs de lamelle (6, 7) adjacents auxquels mènent les bras latéraux (30, 31) de l'organe de liaison (20).

2. Machine électrique selon la revendication 1,
**caractérisée en ce**
**qu'**exactement un bras latéral (30) bifurque à partir de la nervure principale (21) dans le sens circonférentiel (5) et/ou en ce qu'exactement un bras latéral (31) bifurque à partir de la nervure principale (21) dans le sens opposé au sens circonférentiel (5).

3. Machine électrique selon la revendication 1,
**caractérisée en ce**
**qu'**un troisième bras latéral supplémentaire (30') bifurque à partir de la nervure principale (21) dans le sens circonférentiel (5), de manière espacée par rapport au premier bras latéral (30), et/ou en ce qu'un quatrième bras latéral supplémentaire (31') bifurque à partir de la nervure principale (21) dans le sens opposé au sens circonférentiel (5), de manière espacée par rapport au deuxième bras latéral (31).

4. Machine électrique selon la revendication 3,
**caractérisée en ce que** le premier bras latéral (30) et le troisième bras latéral (30') s'étendent ensemble au moins partiellement dans le sens circonférentiel (5), ou **en ce que** le deuxième bras latéral (31) et le quatrième bras latéral (31') s'étendent ensemble au moins partiellement dans le sens opposé au sens circonférentiel (5).

5. Machine électrique selon les revendications 1 à 4,
**caractérisée en ce que**
les bras latéraux (30, 31) de chaque organe de liaison (20, 23) mènent à chaque fois à un secteur de lamelle (7), et **en ce que** les bras latéraux (30, 31) d'un organe de liaison (20, 23) et le secteur de lamelle (7) auquel les bras latéraux (30, 31) de l'organe de liaison (20, 23) mènent entourent un évidement (45) de la lamelle (4).

6. Machine électrique selon les revendications 1 à 4,
**caractérisée en ce que**
les bras latéraux (30, 31) de chaque organe de liaison (20, 23) mènent à chaque fois à des secteurs de lamelle (6, 7) adjacents.

7. Machine électrique selon la revendication 1,
**caractérisée en ce que**
la nervure principale (32) comprend une saillie de serrage (46) qui s'étend le long de l'axe radial (19) jusqu'à la cavité pour aimant (10), et **en ce qu'**un aimant (37) disposé dans la cavité pour aimant (10) est retenu dans la cavité pour aimant (10) par la saillie de serrage (46).

8. Machine électrique selon l'une quelconque des revendications 1 à 7,
**caractérisée en ce que**
chaque organe de liaison (20, 23) n'est pas présent dans une lamelle (4), mais seulement chaque deuxième ou troisième organe de liaison (20, 23) est réalisé.

9. Machine électrique selon l'une quelconque des revendications 1 à 8,
**caractérisée en ce**
**qu'**un arbre (3) est prévu, et en ce que la lamelle (4) s'applique au moins indirectement contre l'arbre (3) et/ou est fixée au moins indirectement à l'arbre (3), par la couronne de fixation (15).

10. Machine électrique selon l'une quelconque des revendications 1 à 9,
**caractérisée en ce que**
les secteurs de lamelle (6, 7, 8) sont reliés les uns aux autres sur une circonférence (40) de la lamelle (4) au niveau des cavités pour aimants (9, 10) par le biais de nervures (47, 48) disposées à l'extérieur, ou **en ce que** les secteurs de lamelle (6, 7, 8) ne sont pas reliés les uns aux autres sur la circonférence (40) de la lamelle (4) au niveau des cavités pour aimants (9, 10) et des saillies de retenue (41 à 44) sont prévues, sur lesquelles s'appuient des aimants (36, 37) disposés dans les cavités pour aimants (9, 10).
